(19) Europäisches Patentamt

European Patent Office

Office européen des brevets

(11) **EP 1 211 817 A1**

(12) **EUROPEAN PATENT APPLICATION**

(43) Date of publication:
**05.06.2002 Bulletin 2002/23**

(51) Int Cl.[7]: **H04B 7/005**

(21) Application number: **00310739.8**

(22) Date of filing: **04.12.2000**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **LUCENT TECHNOLOGIES INC.**
**Murray Hill, New Jersey 07974-0636 (US)**

(72) Inventor: **Schefczik, Hans Peter**
**91056 Erlangen (DE)**

(74) Representative:
**Buckley, Christopher Simon Thirsk**
**Lucent Technologies (UK) Ltd,**
**5 Mornington Road**
**Woodford Green, Essex IG8 0TU (GB)**

(54) **Method for transmitted power control**

(57) The invention is based on regulating an optimum transmitted power level between a network (BSS) and a connecting device (MS), in particular at the network-user interface of a mobile radio system.

While a connection is being set up between the network (BSS) and a connecting device (MS), at least one first data set to be transmitted is transmitted at a maximum possible transmitted power level, which can be preset, and after measuring the received signal which contains the at least first transmitted data set, the parameters which are required for an optimum transmitted power level between the network (BSS) and the connecting device (MS) are determined as a function of the received signal and the transmitted power level, and are used as starting parameters for an algorithm which is provided for transmitted power readjustment.

**Description**

The invention relates to a method for controlling a transmitted power level between a network and a connecting device, in particular at the network-user interface of a mobile radio network, to a system which is suitably adapted for carrying out the method, and to a corresponding computer program.

In virtually all the preferably wire-free transmission systems and/or networks, in particular mobile radio systems, which are in use nowadays, as well as those which may be developed in the future, one major aspect with regard to data transmission is the adaptation and control and/or regulation of a largely optimum transmitted power level.

One aim of this optimization is normally to ensure, depending on the nature of the transmission path and/or of the distance to be covered, that the individual transmitted signals are received essentially with the same intensity at the receiver end, including situations where a mobile station changes its position. As persons skilled in the art are aware available capacities, in particular, can be used better if the signals to be transmitted are transmitted by the respective transmitters only with the minimum necessary energy. Furthermore, interference with other connections can be reduced and this, in turn, may have a positive effect on the available capacity and on the quality of the individual connections. In addition, any path loss which is present can be taken into account at least partially as a primary factor, and can thus be compensated for as appropriate, by means of transmitter-end power level control.

Methods which are required to optimize the transmitted power level, in particular for adaptation of appropriate parameters, can in this case be carried out just by the network, in particular by a base station subsystem (BSS) in a GSM mobile radio system or, on a task-specific basis, by the network and a respective connecting device, which is connected to this network, that is to say in particular a mobile station.

However, before user data, for example, can be transmitted between a mobile station and a BSS, a connection must be set up between them, and the mobile station must be assigned a specific user data transmission channel. This is true irrespective of the intended data transmission direction, that is to say irrespective of whether the transmission originates from the mobile station in the uplink direction, or from the network, that is to say in particular from the BSS, in the downlink direction.

Conventionally, data which are required from the mobile station for registration are initially transmitted, during this so-called registration phase, at a preset, normally maximum transmitted power level.

The adaptation of the optimum transmitted power level is then carried out, using defined readjustment algorithms, as a function of the received transmitted signals and/or further predetermined required values, in particular with regard to the signal strength (RXLEV in GSM systems), the bit error rate (RXQUAL in GSM systems) and/or the carrier-to-noise ratio (C/I).

In the case of GSM system voice services, for example, the transmitted power level of a mobile station can at the moment be reduced, or possibly increased, by 2 dB every 60 milliseconds although, since the channel is permanently assigned to a respective mobile station during a connection, a large number of parameters can be interchanged between the mobile station and the BSS for transmitted power level optimization.

Disadvantages occur in packet-switching connection services if the amount of user data to be transmitted is so low that the transmitted power level cannot be optimized just on the basis of the required transmission time. On the other hand, even in the event of relatively long transmission times, the first data sets are transmitted at a power level which is not optimized. This results in particular in an excessively high transmitted power level together with the disadvantages mentioned above, or else an excessively low transmitted power level, which can lead to termination if the received signals are too weak to be decoded.

In packet-switching connection services, in particular such as the so-called GPRS (General Packet Radio Service) or the EGPRS (Enhanced General Packet Radio Service), there is also a problem in that parameters which are required for optimization cannot be interchanged as frequently and regularly as in through-switched connection services. Even if the method which is required for power control in the uplink direction is thus carried out essentially completely by the mobile station, this results essentially in the same disadvantages as in a through-switched connection service, in particular since up-to-date parameters which are required by the network, that is to say essentially by the BSS, can be received only during a transmission phase in the downlink direction.

The abovementioned disadvantages thus generally mean that the quality of service (QoS) is reduced overall, in particular with respect to the throughput rate and/or delays in user data transmission.

In consequence, one object of the invention is to find a way to ensure an improved Quality of Service for data transmission on wire-free transmission paths.

A further object of the invention is, in addition, to regulate an optimum transmitted power level considerably more efficiently and thus to achieve an optimum transmitted power level in a considerably shorter time than with the prior art.

According to the invention, the objects are achieved by a method having the features of Claim 1 and by a system and a computer program having the features of Claims 9 and 14, respectively.

Advantageous or preferred embodiments and/or developments are the subject matter of the respective dependent claims.

The invention thus provides for at least one first data set which is to be transmitted to be transmitted at a maximum possible transmitted power level, which can be preset, while a connection is being set up between the network and a connecting device, with parameters which are required for an optimum transmitted power level between the network and the connecting device being determined as a function of the received signal and the transmitted power level after measuring the received signal, which contains at least the first transmitted data set, and for these parameters to be used as starting parameters for an algorithm which is provided for transmitted power readjustment.

One advantage that results from the optimum starting parameters which are determined is that a transmitted power readjustment algorithm which is used results in regulation at the optimum transmitted power level considerably more quickly. In consequence, even short data sets can be transmitted optimally, thus improving the Quality of Service, overall. Furthermore, in consequence, the radiation load on a user of a connecting device is reduced considerably earlier than in the past.

In particular, the path loss which is present while setting up the connection is preferably determined, since the optimum transmitted power level which is required at that time can be determined as a function of this in a surprisingly simple manner.

In addition, particularly when the setting up of a connection involves only a single phase, it has been found to be expedient to determine a received signal level, which is measured at the connecting device, of a beacon signal from the network.

In a preferred manner, the invention furthermore provides for an algorithm which is provided for readjusting the power level of received transmitted signals to be started using starting parameters established according to the invention.

In a preferred manner, the invention provides for the network to determine the parameters on the basis of the access signal transmitted by the connecting device.

Particularly in the case of packet-switching connection services, in which a connection exists only when required, it is further expedient for the network to signal parameters determined to the connecting device, and for this connecting device itself to use these parameters to carry out the readjustment algorithm for its own transmitted power level.

A system which is suitable for carrying out the method includes, according to the invention, a network and at least one connecting device which can be allocated, in particular at the network-user interface of a mobile radio network, and a device for determining starting parameters for a stored algorithm for transmitted power readjustment as a function of the signal, which is transmitted between the network and the connecting device, with an output transmitted power level which can be preset.

In particular, in a preferred manner, the network comprises the device for determining starting parameters in order to use the invention in as cost-efficient a manner as possible and to avoid having to define new Standards and/or interfaces.

Furthermore, in an advantageous manner, the network and the connecting device have access to the algorithm for transmitted power readjustment, in order to regulate the readjustment process in a time-saving manner, in which it is, in principle, sufficient for this to be done only by the connecting device or by the network.

For practical applications, the invention provides, in particular, for the system to be in the form of a mobile radio system which complies with the GSM Standard.

The invention furthermore provides for the system to operate in accordance with a through-switched connection service and/or in accordance with a packet-switching connection service which complies, in particular, with the GPRS or EGPRS Standard.

Furthermore, a computer program which is suitable in particular for implementation within the system according to the invention is proposed for carrying out the method.

The proposed approach for early determination of optimum parameters for an algorithm for readjustment in particular of the transmitted power level in the uplink direction thus not only has considerably improved transmission characteristics, in particular with regard to reduction of interference, which results overall in the quality and capacity being improved. Furthermore, the maximum throughput performance is increased and the transmission delay reduced, which in turn results in a considerably improved Quality of Service (QoS). A corresponding argument furthermore applies to the use of the invention for optimization of the network transmitted power level in the downlink direction.

Since the transmitted power levels are optimized in a very much earlier phase, in some cases even before the first user data transmission, the required power and energy requirements of a device that is part of the network and of the connecting device, that is to say in particular the base station and the mobile station, is furthermore considerably reduced, resulting in the energy stores which are used having a longer life.

The invention will be described in detail in the following text, using an exemplary embodiment and with reference to the attached drawings, in which:

Figure 1    shows, schematically, the data flow between a - mobile station and a network for setting up a data transmission in the uplink direction,

Figure 2    shows the transmitted power level $P_{CH}$ of a mobile station as a function of the normalized signal level C of the network as received at the mobile station, for three different specific power control parameters $\Gamma_{CH}$,

Figure 3    shows schematically, the data flow when the network is polling for an acknowledgement from the mobile station, and

Figure 4    shows, schematically, the data flow and the acknowledgement between the network and the mobile station for a data transmission in the downlink direction.

The invention will be described using a GPRS network, by way of example, in the following text.

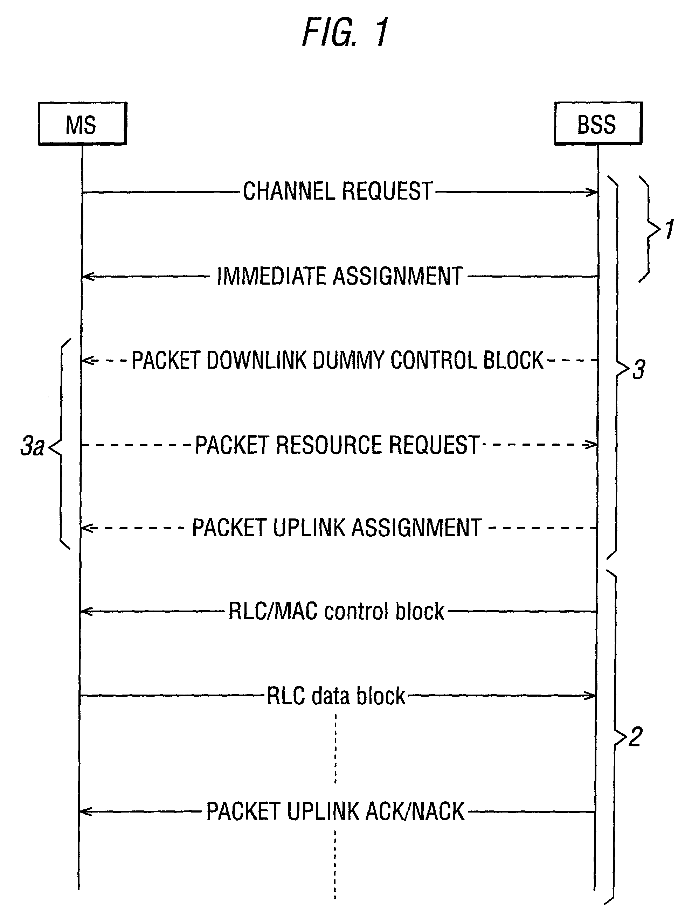

A mobile station initially transmits at the maximum possible power level, in a conventional manner, to a GPRS network during the registration process. This maximum transmitted power level is in this case governed either by the class to which the mobile station belongs or by the maximum power allowed in the respective cell. Before the mobile station requests the network to allocate a channel, the mobile station for this purpose measures the power level of a signalling or beacon channel which is transmitted by the network at the maximum power level BS_PWR_MAX, in order then to register with the network using a so-called "CHANNEL REQUEST" (Fig. 1). On the other hand, while the user data are actually being transmitted, the network has no a-priori knowledge of the mobile station transmitted power level. In fact, the mobile station carries out signal level measurements on an assigned channel during a rest state (Packet Idle Mode) and calculates as is known to a person skilled in the art in this field, a transmitted power level $P_{CH}$, using the parameters obtained and/or transmitted by the network, in accordance with the following formula:

$$P_{CH} - \min(\Gamma_0 - \Gamma_{CH} - a*(C + 48), PMAX) \qquad (1)$$

where

$\Gamma_{CH}$    is a power control parameter which is specific with respect to the mobile station and the assigned channel, and is transmitted by the network, by means of signalling information, to the mobile station and has values of {0, 2, 4, ..., 62)dBm,

$\Gamma_0$    is a constant parameter which is dependent on the frequency band and is set to 39dBM (8Watt) for GSM900 and 36dBM (4Watt) for GSM1800,

$\alpha$    is a system parameter which is either broadcast by the network or is transmitted to the mobile station by means of signalling information, and which may assume the values 0; 0.1; ...; 1,

C    is the normalized received signal level, which is measured at the mobile station and is determined using a predetermined averaging method, in particular using a weighting filter, and

PMAX    is the maximum permissible transmitted power in the cell.

Since, as a rule, the transmission characteristics change continuously and/or suddenly as well while a connection exists, the transmitted power level is thus readjusted as appropriate in accordance with the formula (1) while the user data are being transmitted.

As already mentioned, the parameter C is determined for this process by the mobile station as a function of the measured and averaged or weighted intensity of a received signal, in a manner with which a person skilled in the art is familiar. The parameters $\alpha$ and $\Gamma_{CH}$ are in turn determined by the network and are sent to the mobile station. In order to start the transmitted power readjustment algorithm, $\Gamma_{CH}$ is conventionally set to 0, and, as a rule, $\alpha$ is set to 0.5, with $\alpha$ remaining constant and $\Gamma_{CH}$ being varied as a function of the respective transmission conditions and other system parameters at the time.

According to the invention, the optimum starting parameters are determined on the basis of a channel estimate, during the CHANNEL REQUEST, on the basis of the first signalling level which is transmitted by the mobile station at the maximum possible transmitted power level PS_TX_PWR_MAX. On the basis of the class information transmitted by the mobile station during the CHANNEL REQUEST, and/or via the signalling or beacon channels transmitted by the network at the maximum permissible power level, the network knows or assumes the transmitted power level from the mobile station during this phase.

The following detailed sequence is initially based on a single-stage registration phase 1, with reference to the data flow illustrated by way of example in Figure 1.

Accordingly, the mobile station thus always transmits at the maximum possible transmitted power level during the "CHANNEL REQUEST", and this is referred to in the following text as PS_TX_PWR_MAX. As already mentioned above, this is governed either by the class to which the mobile station belongs or by the maximum power level allowed in the respective cell, that is to say PMAX.

If the mobile station then registers with the network at PS_TX_PWR_MAX, the network receives a signal power level $SS_B$. Since, at this time, the network thus knows, or possibly assumes, that the transmitted power level is PS_TX_PWR_MAX, the network, that is to say essentially the responsible base subsystem BSS, determines the path loss PL in the uplink direction, which in this case also includes any possible radio shadowing, in accordance with

$$PL = PS\_TX\_PWR\_MAX - SS_B \qquad (2).$$

Furthermore, for a single-stage registration 1, the parameter C is likewise determined by the network, by estimation, having been intrinsically calculated by the mobile station MS by measuring the signalling or beacon channel, for example the so-called BCCH (Broadcast Control Channel) which is transmitted by the network BSS at the power level BS_PWR_MAX.

For this purpose, the network BSS assumes that the path loss in the downlink direction corresponds to that in the uplink direction, so that the estimated value of C is obtained from

$$C' = BS\_PWR\_MAX - PL \qquad (3).$$

The estimated value C' becomes a more realistic representation of the actual value C the less the path loss has actually changed since the last measurement carried out by the mobile station MS.

Furthermore, the estimated value C' corresponds to the actual C if the weighting factor forget factor for calculating C is equal to 1, that is to say C is exactly the received signal level measured at the mobile station MS.

The network BSS then determines the initial transmitted power level $P_{CH\_START}$ of the mobile station MS based on the received power level $SS_{B\_OPT}$ desired by it, that is to say which is optimum for it, and the path loss PL from:

$$P_{CH\_START} = SS_{B\_OPT} + PL \qquad (4).$$

Finally, the network BSS uses the formula (1) to determine the initial parameter $\Gamma_{CH\_START}$ using

$$\Gamma_{CH\_START} = \Gamma_0 - P_{CH\_START}\, \alpha^*(C' + 48) \qquad (5).$$

$\Gamma_{CH\_START}$ is transmitted together with $\alpha$ with the channel assignment information "IMMEDIATE ASSIGNMENT" (Figure 1) to the mobile station MS, which then uses formula (1) to start controlling the transmitted power level. While the subsequent data transmission 2 is taking place, the parameters required for transmitted power readjustment are interchanged in the normal way between the mobile station MS and the network BSS, so that $\Gamma_{CH}$ is readjusted in the known manner on the basis of quality fluctuations in the uplink direction.

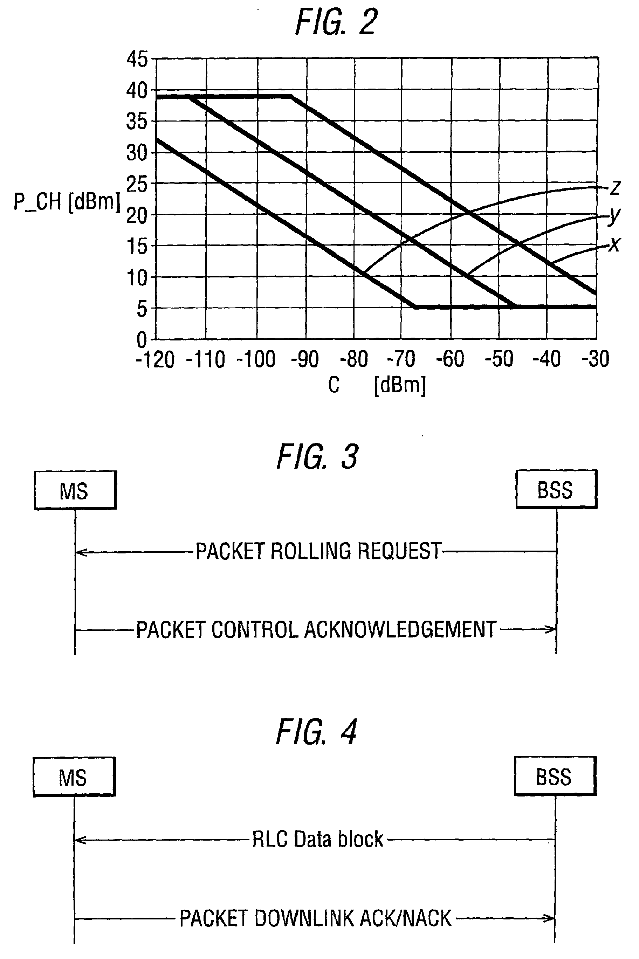

By way of example, Figure 2 shows the readjustment of a transmitted power level $P_{CH}$ as a function of the parameters C and $\Gamma_{CH}$. The mobile station transmitted power level is limited to a standardized interval of 5, ..., 39dBm. The parameter $\Gamma_{CH}$ for the curves denoted by x, y and z has the respective values 40, 30 and 20. In all three cases, the parameter $\alpha$ is set to 0.5, and $\alpha$ is generally set to be equal to 0.5, based on theoretical analyses and results from simulations.

However, since, according to the invention, the readjustment algorithm (1) now starts with optimum starting parameters, then, based on the method according to the invention as described above in the uplink direction with reference to a GPRS network, the optimum transmitted power level of the mobile station MS will be used for data transmission regulation after a time interval which is considerably shorter than that of the prior art. Thus, in other words, even short data sets, such as acknowledgements or other control information, can be transmitted at the optimum transmitted power level. Furthermore, the radiation load on the user of a mobile station is reduced considerably earlier.

As can also be seen in Figure 1, in a modification of a single-stage registration 1, in the case of a two-stage registration 3 with the additional data transfer 3a associated with this and with the response to the "PACKET DOWNLINK DUMMY CONTROL BLOCK" transmitted by the network BSS, the parameter C, which is determined by the mobile station MS, is transmitted directly to the network BSS within the so-called "PACKET RESOURCE REQUEST" information. In this case, C therefore no longer needs to be estimated by the network BSS and, furthermore, it is more reliable to determine the path loss from (3) than from (1), since it is also possible to take account of the measurement of the signal level from the "PACKET RESOURCE REQUEST" information for the measurement of $SS_B$.

Once the starting parameters $\Gamma_{CH\_START}$ and $\alpha$ have been transmitted to the mobile station during the "PACKET UPLINK ASSIGNMENT" channel assignment information (Figure 1), the transmitted power readjustment algorithm (1) is once again started with the optimum starting parameters, immediately after the two-stage registration 3.

It should be mentioned that, furthermore, the network BSS can instruct the mobile station MS to transmit further access signals in order to determine, for example, the timing advance for frame alignment. This can be done, for example, during a "PACKET POLLING REQUEST" request (Figure 3), which the mobile station MS responds to with the "PACKET CONTROL ACKNOWLEDGEMENT", which is conventionally for further access signal blocks or another control block. In a similar way, parameters which are required for the network BSS, such as the values C or RXQUAL, can be transmitted with a confirmation (requested by the network BSS) of data transmitted in the downlink direction, by the mobile station MS by means of a "PACKET DOWNLINK ACK/NACK" block.

In a practical way, the invention furthermore allows, by means of the formula (3), determination of an optimum transmitted power level for transmission by the network, as well, that is to say essentially from the base station that is involved to the mobile station. In consequence, the method according to the invention, which is based on a channel estimate, is furthermore expedient for determining optimum starting parameters for transmission in the downlink direction.

Since, furthermore, the devices and/or computer programs required by the invention to carry out the method are essentially integrated exclusively within the network, the hardware and/or software of the individual subscriber access units, that is to say in particular the units of suppliers, are not affected by this, so that there is no need to define any new interfaces nor is any adaptation to the Standards required.

Since, once the optimum starting parameters have been determined for transmitted power control, both in the uplink direction and in the downlink direction, essentially known methods are used for further control and/or regulation of the respective transmitted power levels, as already mentioned above, these will not be described in any more detail here.

However, it should be mentioned that any change to the transmission path characteristics generally leads to corresponding readjustment of the parameter $\Gamma_{CH}$ and of the transmitted power level of the base station.

Particularly with regard to the prior art, it should, however, be mentioned with respect to a GPRS system or even a EGPRS system that the parameter C, measured by the mobile station in the BSS, cannot be determined once again during data transmission in the uplink direction, since the path loss of the channel for this direction is not known. C is not transmitted once again until a data transmission takes place in the downlink direction, on some occasions within so-called "PACKET DOWNLINK ACK/NACK" information (Figure 4).

For this reason, and in contrast to the invention, according to which the optimum starting parameters for the transmitted power readjustment algorithm are set, a method according to the prior art, using which an optimum parameter $\Gamma_{CH}$ is found only by gradual, step-by-step adjustment, can take a very long time, particularly for GPRS or EGPRS systems, and thus does not lead to any optimization, particularly in the case of short data transmissions.

The approach according to the invention, which has been described with reference to examples, thus represents an extremely efficient way to determine optimum starting parameters for carrying out transmitted power readjustment. Particular fields of application in this case include mobile radio systems which operate with packet-switching services, such as GPRS or EGPRS services. The invention can thus be used in an expedient manner at the start of data transmission and for short data despatches, such as monitoring messages, in which case the described approach leads to the optimum transmitted power level for the respective transmission conditions at any given time being set quickly for transmission not only in the uplink direction but also in the downlink direction.

## Claims

1. Method for controlling a transmitted power level between a network and a connecting device, in particular at the network-user interface of a mobile radio network, comprising the following steps:

   a) setting up of a connection between the network (BSS) and the connecting device (MS), in which case at least one first data set which can be transmitted for this purpose is transmitted at a maximum possible transmitted power level, which can be preset,
   b) measuring the received signal which contains at least the first transmitted data set,
   c) determining parameters which are required for an optimum transmitted power level between the network (BSS) and the connecting device (MS) as a function of the received signal and the transmitted power level,
   d) carrying out an algorithm, which is provided for transmitted power readjustment, using the parameters determined in step c) as the starting parameters.

2. Method according to Claim 1, **characterized in that** the path loss is determined in step c).

3. Method according to Claim 2, **characterized in that** a received signal level, which is measured at the connecting device (MS), of a beacon signal from the network (BSS) is determined in step c).

4. Method according to Claim 1, 2 or 3, **characterized in that** an algorithm which is provided for readjusting the power level of the received transmitted signals is started on the basis of at least one of the parameters determined in step c).

5. Method according to one of Claims 1 to 4, **characterized in that** the connecting device (MS) transmits in step a), and the network (BSS) carries out step c).

6. Method according to Claim 5, **characterized in that** the network (BSS) carries out step d), and presets the respective transmitted power levels to be readjusted, for the connecting device (MS).

7. Method according to Claim 5, **characterized in that** the network (BSS) signals parameters determined in step c) to the connecting device (MS), and step d) is carried out by the connecting device (MS).

8. Method according to one of Claims 1 to 7, **characterized in that** a connection is set up in one stage (1) or in two stages (3, 3a).

9. System for carrying out a method according to one of Claims 1 to 8, comprising

   - a network (BSS) and at least one connecting device (MS) which can be allocated, in particular at the network-user interface of a mobile radio network,

     **characterized by**

   - a device for determining starting parameters for a stored algorithm for transmitted power readjustment as a function of a signal, which is transmitted between the network (BSS) and the connecting device (MS), with an output transmitted power level which can be preset.

10. System according to Claim 9, **characterized in that** the network (BSS) comprises the device for determining starting parameters.

11. System according to Claim 9 or 10, **characterized in that** the network (BSS) and/or the connecting device (MS) access/accesses the algorithm for transmitted power readjustment.

12. System according to one of Claims 9 to 11, **characterized in that** the system is a GSM mobile radio system.

13. System according to one of Claims 9 to 12, **characterized in that** the system operates in accordance with a through-switched connection service and/or in accordance with a packet-switching connection service which complies, in particular, with the GPRS or EGPRS Standard.

14. Computer program for carrying out a method according to one of Claims 1 to 8, in particular within a system according to one of Claims 9 to 13.

# FIG. 1

## FIG. 2

## FIG. 3

## FIG. 4

**European Patent Office**

## EUROPEAN SEARCH REPORT

Application Number

EP 00 31 0739

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 995 496 A (HONKASALO ZHICHUN ET AL) 30 November 1999 (1999-11-30) * abstract * * column 3, line 24 - column 4, line 40 * * column 10, line 10 - line 57 * | 1-14 | H04B7/005 |
| X | US 5 220 678 A (FEEI LOH J) 15 June 1993 (1993-06-15) | 1-11,14 | |
| A | * abstract * * column 1, line 53 - last line * * column 2, line 30 - column 3, line 26 * | 12,13 | |
| X | EP 0 515 335 A (ERICSSON TELEFON AB L M) 25 November 1992 (1992-11-25) | 1-11,14 | |
| A | * abstract * * column 2, line 5 - line 23 * * column 3, line 28 - line 40 * * column 5, line 49 - column 6, line 3 * * column 6, line 53 - column 7, line 7 * | 12,13 | |
| X | EP 1 050 977 A (LUCENT TECHNOLOGIES INC) 8 November 2000 (2000-11-08) * abstract * * paragraph '0022! * | 1,9,14 | TECHNICAL FIELDS SEARCHED (Int.Cl.7) H04B |

The present search report has been drawn up for all claims

| Place of search | Date of completion of the search | Examiner |
|---|---|---|
| THE HAGUE | 12 June 2001 | Lustrini, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 00 31 0739

This annex lists the patent family members relating to the patent documents cited in the above–mentioned European search report.
The members are as contained in the European Patent Office EDP file on
The European Patent Office is in no way liable for these particulars which are merely given for the purpose of information.

12-06-2001

| Patent document cited in search report | | Publication date | Patent family member(s) | | Publication date |
|---|---|---|---|---|---|
| US 5995496 | A | 30-11-1999 | FI | 962510 A | 18-12-1997 |
| | | | AU | 732973 B | 03-05-2001 |
| | | | AU | 2492497 A | 08-01-1998 |
| | | | AU | 3177397 A | 07-01-1998 |
| | | | CN | 1171663 A | 28-01-1998 |
| | | | DE | 19725438 A | 18-12-1997 |
| | | | ES | 2134143 A | 16-09-1999 |
| | | | WO | 9749197 A | 24-12-1997 |
| | | | FR | 2750000 A | 19-12-1997 |
| | | | GB | 2314486 A,B | 24-12-1997 |
| | | | IT | MI971416 A | 16-12-1998 |
| | | | JP | 10065612 A | 06-03-1998 |
| | | | NL | 1006289 A | 19-12-1997 |
| | | | SE | 9702311 A | 18-12-1997 |
| US 5220678 | A | 15-06-1993 | NONE | | |
| EP 0515335 | A | 25-11-1992 | AU | 1626692 A | 19-11-1992 |
| | | | BR | 9201853 A | 05-01-1993 |
| | | | CA | 2068806 A | 18-11-1992 |
| | | | FI | 922231 A | 18-11-1992 |
| | | | JP | 6164470 A | 10-06-1994 |
| | | | MX | 9202225 A | 01-11-1992 |
| EP 1050977 | A | 08-11-2000 | AU | 3131900 A | 09-11-2000 |
| | | | BR | 0002134 A | 13-03-2001 |
| | | | JP | 2001007764 A | 12-01-2001 |